# FASCICULE DE BREVET EUROPEEN

(11) **EP 2 192 320 B1**
(45) Date de publication et mention de la délivrance du brevet: **29.06.2011**
(21) Numéro de dépôt: 09172230.6
(22) Date de dépôt: 05.10.2009
(51) Int. Cl.: F16D 55/2265, F16D 65/00

(54) **Dispositif de frein à disque**
Scheibenbremsvorrichtung
Disc brake device

(30) Priorité: 27.11.2008 FR 0806686
(43) Date de publication de la demande: 02.06.2010
(73) Titulaire: Robert Bosch GmbH, 70442 Stuttgart (DE)
(72) Inventeur: Le Tohic, Dominique, 92130, ISSY LES MOULINEAUX (FR); Magnaudet, Patrick, 77300, FONTAINEBLEAU (FR); Picot, Pascal, 77170, BRIE COMTE ROBERT (FR)
(74) Mandataire: Hurwic, Aleksander Wiktor

(56) Documents cités:
- FR-A- 2 772 097
- FR-A- 2 806 138
- JP-A- 9 032 872
- JP-U- 55 066 226

## Description

La présente invention se rapporte à un dispositif de frein à disque. Plus particulièrement la présente invention se rapporte à un dispositif de frein à disque à guidage d'étrier par colonnettes.

Un frein à disque est habituellement situé sur un moyeu d'au moins une roue de véhicule. Ce moyeu est apte à recevoir un axe de la roue du véhicule et à supporter le frein à disque. Le frein à disque comporte, comme partie mobile, un disque de frein. Ce disque de frein est relié à la roue du véhicule de telle manière que la roue communique un mouvement de rotation au disque de frein. Le frein à disque comporte également une chape et un étrier non mobiles en rotation. La chape est fixée au moyeu et permet notamment de maintenir l'étrier.

Le frein à disque comporte un piston. Le piston est installé dans une chambre ménagée dans l'étrier. Un espace est ménagé entre le piston et une mâchoire de rappel de l'étrier. Dans cet espace sont logées deux plaquettes de frein. Ces plaquettes comportent une garniture et un support de garniture. La garniture est la partie de la plaquette susceptible d'entrer en contact avec le disque.

Le piston appuie sur la première plaquette de frein. La mâchoire de rappel de l'étrier appuie sur la seconde plaquette de frein. Le plaquage de cette première plaquette de frein contre le disque par le piston entraîne un déplacement de l'étrier. Un tel déplacement provoque le plaquage de la seconde plaquette contre le disque, et le serrage de ce disque entre les deux plaquettes.

Dans un exemple, pour contrôler les déplacements tangentiels de l'étrier, la chape comporte deux zones de coulissement situées sur ses extrémités. Ces zones de coulissement comportent des alésages. Ces alésages permettent un coulissement axial de l'étrier par rapport à la chape. Pour cela, l'étrier comporte deux colonnettes. Ces deux colonnettes coulissent dans les alésages ménagés dans la chape.

Lors d'un freinage, l'appui des plaquettes sur le disque en rotation entraîne la création d'une force de traînée. La force de traînée est une force de réaction entraînant les plaquettes en rotation. Afin d'empêcher la rotation des plaquettes, la chape comporte une zone de réception sur laquelle viennent buter les plaquettes. Dans certains modèles de freins à disque, une première plaquette est bloquée en rotation par la chape alors qu'une deuxième plaquette est bloquée en rotation par l'étrier. L'invention se rapporte aux dispositifs de freinage dans lesquels les deux plaquettes butent contre la chape. Le rôle de l'étrier dans un tel dispositif, appelé étrier flottant, est uniquement de pousser les plaquettes contre le disque, la force de réaction engendrée par cette poussée étant contrée par la chape.

Le déplacement de l'étrier entraîne le coulissement des colonnettes dans les alésages de la chape. Les colonnettes ne servent alors qu'à guider l'étrier lors de l'application des plaquettes sur le disque.

Cependant, la butée des plaquettes sur la chape entraîne une déformation de la chape. Cette déformation de la chape entraîne la création d'une contrainte sur les colonnettes lors du coulissement dans les alésages. La contrainte favorise la propagation, entre l'étrier et la chape et vice-versa, des vibrations générées par le frottement disque / plaquettes. Ces vibrations sont à l'origine de bruits désagréables pour le conducteur.

Lorsque les colonnettes sont cylindriques, l'augmentation des vibrations, associées au faible écart entre les colonnettes et les parois internes des alésages, entraîne un battement des colonnettes contre les alésages. Pour empêcher la transmission des vibrations entre la chape et l'étrier, il faut éviter que les deux colonnettes ne soient au contact de leur alésage.

Une solution à ce problème, connue de l'homme du métier, consiste en la création de colonnettes en escalier. Une telle colonnette voit son diamètre diminuer par palier successifs. Un tel dispositif est simple à réaliser ; cependant, la présence de paliers ne permet pas de supprimer complètement les contacts colonnette / alésage. Un palier comporte un début de palier, correspondant à une extrémité de ce palier proche d'un palier de diamètre supérieur, ou proche de l'étrier dans le cas du premier palier. De même, un palier comporte une fin de palier, correspondant à une extrémité de ce palier proche d'un palier de diamètre inférieur, ou d'une extrémité de la colonnette éloignée de l'étrier dans le cas du dernier palier. En fin de palier, un écart entre une paroi interne de l'alésage et la colonnette associé aux vibrations est tel que la colonnette ne touche pas la paroi interne de l'alésage lors d'un freinage. Cependant, en début de palier, les vibrations sont telles que l'écart n'est pas suffisant pour éviter le battement et donc la transmission des vibrations sonores.

Le document JP 09 032872 A montre un dispositif d'après le préambule de la revendication 1.

Pour résoudre ces problèmes, l'invention prévoit de donner aux colonnettes une forme tronconique. Une colonnette selon l'invention est telle que l'écart entre la colonnette et une paroi interne de l'alésage augmente progressivement, et non pas par paliers. Une telle colonnette tronconique comporte une extrémité ayant un plus petit diamètre de la colonnette plus enfoncée dans l'alésage qu'une extrémité de la colonnette ayant un plus grand diamètre. Afin d'assurer malgré tout le guidage de la colonnette dans l'alésage, en particulier lorsque l'usure des garnitures de freinage est telle que la colonnette est peu avancée dans l'alésage, l'extrémité de la colonnette éloignée de l'étrier comporte une excroissance de guidage.

Avantageusement, cette excroissance forme un cylindre ayant une base de diamètre inférieur et proche du diamètre de l'alésage, afin de guider la colonnette dans l'alésage. Par ailleurs, cette excroissance peut être recouverte de caoutchouc, afin d'amortir les contacts entre la paroi interne de l'alésage et l'excroissance et de réduire l'émission sonore lors de ces contacts.

L'invention a donc pour objet un dispositif de frein à disque comportant les éléments suivants :
- une chape, comportant au moins un alésage,
- un étrier, comportant au moins une colonnette montée coulissante dans l'alésage de la chape,
- un disque monté en rotation par rapport à l'étrier selon un axe de rotation,
caractérisé en ce que la colonnette a une forme tronconique, une extrémité de la colonnette, ayant un diamètre inférieur à un diamètre d'une autre extrémité de la colonnette, étant insérée plus profondément dans l'alésage, et en ce que l'extrémité de la colonnette ayant le plus petit diamètre comporte une excroissance de guidage.

Un mode de réalisation préférentiel de l'invention prévoit que l'excroissance a une forme complémentaire de l'alésage.

Un mode de réalisation préférentiel de l'invention prévoit que l'excroissance est recouverte par une pièce de caoutchouc.

Un mode de réalisation préférentiel de l'invention prévoit que la colonnette a une forme tronconique pure, c'est-à-dire qu'une surface externe de la colonnette tronconique est lisse.

Un mode de réalisation préférentiel de l'invention prévoit que l'excroissance de guidage se développe suivant un axe de coulissement de la colonnette, l'excroissance de guidage comporte une partie de jonction et une partie de blocage, la partie de jonction joint l'extrémité de la colonnette à la partie de blocage, la partie de jonction a une forme cylindrique de diamètre inférieur au diamètre minimal de la colonnette, la partie de blocage a une forme cylindrique de diamètre supérieur au diamètre de la partie de jonction.

Un mode de réalisation préférentiel de l'invention prévoit que la pièce de caoutchouc a une forme cylindrique creuse, une partie creuse de la pièce ayant une forme complémentaire de l'excroissance de guidage.

Un mode de réalisation préférentiel de l'invention prévoit que la pièce de caoutchouc comporte un orifice de passage et un orifice d'évacuation situés sur des bases opposées de la pièce de caoutchouc, ces orifices mettant en communication la partie creuse de la pièce de caoutchouc et l'extérieur.

Un mode de réalisation préférentiel de l'invention prévoit que l'orifice de passage est un orifice circulaire ayant un diamètre légèrement supérieur au diamètre de la partie de jonction.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : Une vue en coupe partielle d'un frein à disque à étrier flottant.
- Figure 2 : Une vue en coupe partielle d'une colonnette introduite dans l'alésage selon l'invention.
- Figure 3 : Une vue en coupe partielle d'une colonnette faiblement introduite dans l'alésage selon l'invention.

Les références ci-après seront utilisées dans les descriptions des figures :
1 - Frein à disque
2 - Axe de rotation de la roue
3 - Disque de frein
4 - Chape
5 - Etrier
6 - Piston
7 - Chambre de coulissement
8 - Plaquette de frein
9 - Garniture de freinage
10 - Support de plaquettes
11 - Zone de coulissement
12 - Extrémité de la chape
13 - Alésage
14 - Colonnette
15 - Force de traînée
16 - Ecart entre la colonnette et la paroi interne de l'alésage
17 - Paroi interne de l'alésage
18 - Extrémité de la colonnette la plus enfoncée dans l'alésage
19 - Diamètre de l'extrémité 18
20 - Extrémité de la colonnette opposée à 18
21 - Diamètre de l'extrémité 20
22 - Excroissance
23 - Cylindre de l'excroissance
24 - Base de l'excroissance
25 - Diamètre de la base 24
26 - Diamètre de l'alésage
27 - Pièce de caoutchouc
28 - Axe de coulissement de la colonnette
29 - Partie de Jonction
30 - Partie de guidage
31 - Diamètre de la partie de jonction
32 - Diamètre minimal de la colonnette
33 - Diamètre de la partie de guidage
34 - Partie creuse de la pièce de caoutchouc
35 - Orifice de passage
36 - Orifice d'évacuation
37 - Diamètre de l'orifice de passage

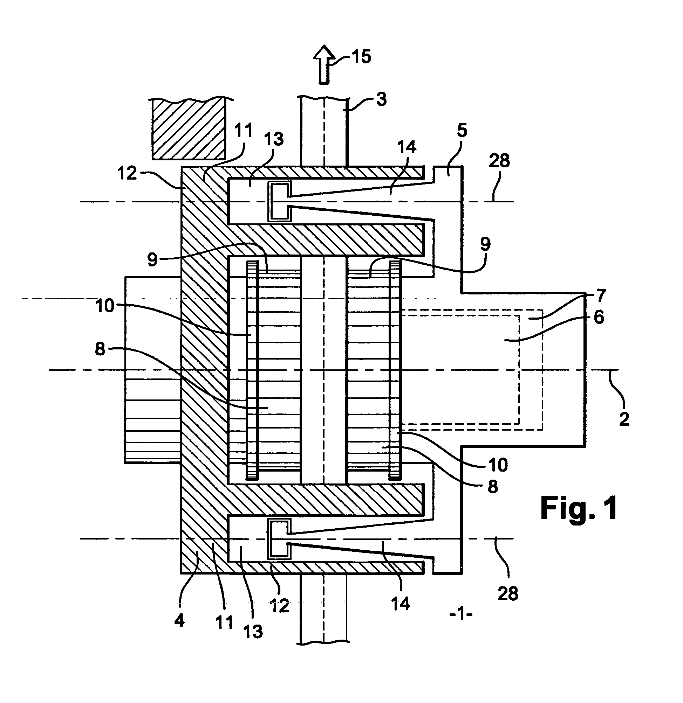

La figure 1 représente une vue en coupe partielle d'un frein à disque à étrier flottant.

Un frein à disque 1 est situé sur un moyeu d'au moins une roue d'un véhicule. Ce moyeu est apte à recevoir un axe 2 de la roue d'un véhicule et à supporter le frein à disque 1. Le frein à disque 1 comporte un disque de frein 3. Ce disque de frein 3 est relié à la roue du véhicule de telle manière que la roue communique un mouvement de rotation au disque de frein 3. Le frein à disque 1 comporte également une chape 4 et un étrier 5 non mobiles en rotation. La chape 4 est fixée au moyeu. La chape 4 permet de maintenir l'étrier 5.

Le frein à disque 1 comporte un piston 6. Le piston 6 est installé dans une chambre 7 ménagée dans l'étrier 5. Un espace est ménagé entre le piston 6 et une mâchoire de rappel de l'étrier. Dans cet espace sont logées deux plaquettes de frein 8. Les plaquettes 8 ont une forme allongée. Ces plaquettes sont globalement alignées avec une portion de couronne du disque 3. Ces plaquettes 8 comportent une garniture 9 et un support de garniture 10. La garniture 9 est la partie de la plaquette susceptible d'entrer en contact avec le disque 3.

Le piston 6 appuie sur une première plaquette de frein. La chambre 7 est réalisée de telle sorte que le piston 6 peut coulisser à l'intérieur de cette chambre 7 afin de plaquer la première plaquette contre le disque de frein 3. Le plaquage de cette première plaquette contre le disque 3 par le piston 6 entraîne un déplacement de l'étrier 5. Un tel déplacement provoque le plaquage de la seconde plaquette contre le disque 3, et le serrage de ce disque 3 entre les deux plaquettes 8.

Dans un exemple, pour contrôler les déplacements tangentiels de l'étrier 5, la chape 4 comporte deux zones de coulissement 11 situées sur des extrémités 12 de la chape 4. Ces zones de coulissement 11 comportent chacune un alésage 13. Par ailleurs, l'étrier 5 comporte deux colonnettes 14. Ces deux colonnettes 14 coulissent dans les alésages 13 ménagés dans la chape 4.

Lors d'un freinage, l'appui des plaquettes 8 sur le disque 3 en rotation entraîne la création d'une force de traînée 15. Cette force de traînée est une force de réaction 15 entraînant les plaquettes 8 en rotation. Afin d'empêcher la rotation des plaquettes 8, la chape 4 comporte une zone de réception sur laquelle viennent buter les plaquettes 8. Le rôle de l'étrier 5 dans un tel dispositif, appelé étrier flottant, est uniquement de pousser les plaquettes 8 contre le disque 3, la force de réaction engendrée par cette poussée étant contrée par la chape 4. Le déplacement de l'étrier 5 entraîne le coulissement des colonnettes 14 dans les alésages 13. Les colonnettes 14 n'ont pas pour fonction de bloquer en rotation l'étrier. Les colonnettes 14 ne servent qu'à le guider lors de l'application de la plaquette 8 sur le disque 3.

Cependant, la butée des plaquettes 8 sur la chape 4 entraîne une déformation de la chape 4. Cette déformation de la chape 4 entraîne la création de contraintes sur les colonnettes 14 lors du coulissement dans les alésages 13. La contrainte favorise la propagation, entre l'étrier 5 et la chape 4 et vice-versa, des vibrations générées par le frottement disque 3 / plaquettes 8. Ces vibrations sont à l'origine de bruits désagréables pour le conducteur.

Avec l'usure des garnitures, la colonnette 14 est de moins en moins avancée dans l'alésage 13. La contrainte appliquée sur les colonnettes 14 associée à la présence d'une partie de la colonnette 14 de moins en moins importante dans l'alésage 13 augmente les vibrations des colonnettes 14. Lorsque les colonnettes 14 sont cylindriques, l'augmentation des vibrations associée à un faible écart 16 entre la colonnette 14 et une paroi interne 17 de l'alésage 13 entraîne un battement de la colonnette 14 contre la paroi interne 17. Ces battements imposent une contrainte mécanique à la colonnette 14 non négligeable de par la répétition et l'importance des chocs lors de ces battements. Cette contrainte mécanique peut endommager la colonnette 14. De plus ces battements génèrent une émission sonore importante.

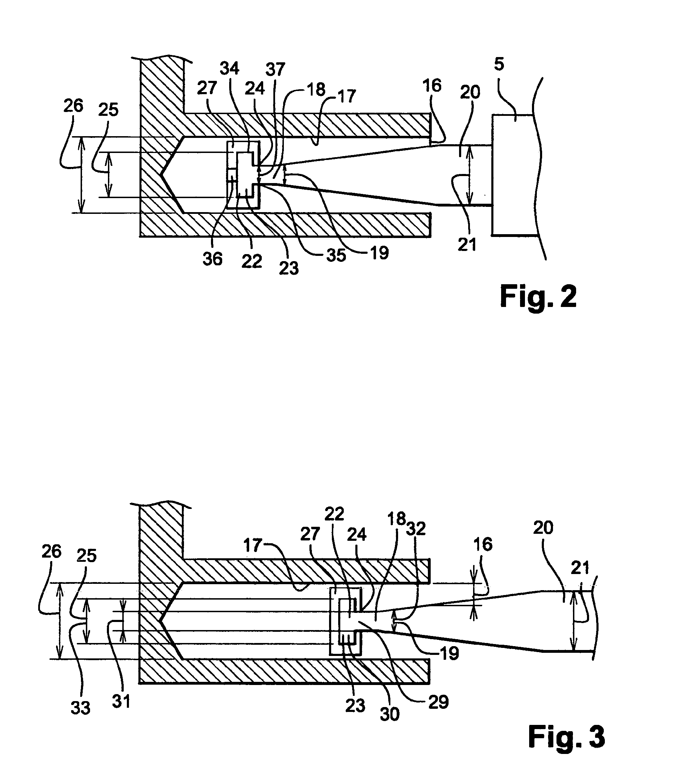

La figure 2 représente une vue en coupe partielle d'une colonnette introduite dans l'alésage selon l'invention.

Selon l'invention, la colonnette 14 est de forme tronconique. Ainsi, la colonnette 14 est telle que l'écart 16 entre la colonnette 14 et la paroi interne 17 augmente progressivement. Une telle colonnette 14 tronconique comporte une extrémité 18 de la colonnette 14 ayant un diamètre 19 inférieur à un diamètre 21 d'une autre extrémité 20 de la colonnette 14. L'extrémité 18 est insérée plus profondément dans l'alésage 13 que l'extrémité 20. Typiquement, l'extrémité 18 est plus éloignée de l'étrier que l'extrémité 20. Avantageusement, la colonnette a une forme tronconique pure, c'est-à-dire qu'une surface externe de la colonnette tronconique est lisse.

Afin d'assurer malgré tout le guidage de la colonnette 14 dans l'alésage 13, en particulier lorsque l'usure des garnitures 9 est telle que la colonnette 14 est peu enfoncée dans l'alésage 13, l'extrémité 18 de la colonnette 14 éloignée de l'étrier 5 comporte une excroissance 22 de guidage. Cette excroissance 22 forme un cylindre 23 ayant une base circulaire 24 de diamètre 25 inférieur et proche d'un diamètre 26 de l'alésage 13 afin de guider la colonnette 14 dans l'alésage 13.

Avantageusement, cette excroissance 22 est recouverte d'une pièce de caoutchouc 27. La pièce de caoutchouc 27 permet d'amortir les contact entre la paroi interne 17 et l'excroissance 22. L'amortissement du caoutchouc 27 permet de réduire l'émission sonore lors de contacts entre l'excroissance 22 et la paroi interne 17. Typiquement, l'association de la pièce de caoutchouc 27 et de l'excroissance 22 a une forme complémentaire de l'alésage 13. Cette complémentarité permet d'assurer un meilleur guidage lors du coulissement de la colonnette 14 dans l'alésage 13.

La figure 3 représente une vue en coupe partielle d'une colonnette faiblement introduite dans l'alésage selon l'invention.

Dans ce mode de réalisation de l'invention, l'excroissance de guidage 22 se développe suivant un axe 28 de coulissement de la colonnette 14. L'excroissance 22 comporte une partie de jonction 29 et une partie de guidage 30. La partie de jonction 29 joint l'extrémité 18 de la colonnette 14 à la partie de guidage 30. La partie de jonction 29 a une forme cylindrique. Un diamètre 31 de la partie de jonction 29 est inférieur à un diamètre 32 minimal de la colonnette 14. La partie de guidage 30 a une forme cylindrique. Un diamètre 33 de la partie de guidage 30 est supérieur au diamètre 31 de la partie de jonction 29.

Avantageusement, la pièce de caoutchouc 27 a une forme cylindrique creuse. Une partie creuse 34 de la pièce en caoutchouc 27 a une forme complémentaire de l'excroissance de guidage 22. La pièce de caoutchouc 27 recouvre donc la partie de guidage 30. La pièce de caoutchouc 27 comporte un orifice 35 de passage. De plus, la pièce de caoutchouc 27 comporte un orifice d'évacuation 36. L'orifice de passage 35 et l'orifice d'évacuation 36 sont situés sur des parties opposées de la pièce de caoutchouc 27. L'orifice de passage a un diamètre 37 proche et supérieur du diamètre 31 de la partie de jonction 29. Typiquement, l'orifice de passage 35 est un orifice circulaire ayant un diamètre 37 légèrement supérieur au diamètre de la partie de jonction en l'absence de déformations. La pièce de caoutchouc 27 est montée sur l'excroissance 22 par insertion de la partie de guidage 30 dans la partie creuse 34. Cette insertion se fait à travers l'orifice de passage 35, l'orifice de passage 35 étant alors déformé lors de cette insertion. Lors de l'insertion, l'air contenu dans la partie creuse 34 est évacué via l'orifice d'évacuation 36.

## Revendications

1. Dispositif de frein à disque (1) comportant
- une chape (4) comportant au moins un alésage (13),
- un étrier (5) comportant au moins une colonnette (14) montée coulissante dans l'alésage de la chape,
- un disque (3) monté en rotation par rapport à l'étrier selon un axe de rotation (2),
**caractérisé en ce que**
- la colonnette a une forme tronconique, une extrémité (18) de la colonnette, ayant un diamètre (19) inférieur à un diamètre (21) d'une autre extrémité (20) de la colonnette, étant insérée plus profondément dans l'alésage que l'autre extrémité (20),
- l'extrémité de la colonnette ayant le plus petit diamètre comporte une excroissance de guidage (22).

2. Dispositif selon la revendication 1, **caractérisé en ce que** l'excroissance a une forme complémentaire de l'alésage.

3. Dispositif selon l'une des revendications 1 à 2, **caractérisé en ce que** l'excroissance est recouverte par une pièce de caoutchouc (27).

4. Dispositif selon l'une des revendications 1 à 3, **caractérisé en ce que** la colonnette a une forme tronconique pure, c'est-à-dire qu'une surface externe de la colonnette tronconique est lisse.

5. Dispositif selon l'une des revendications 1 à 4, **caractérisé en ce que**
- l'excroissance de guidage se développe suivant un axe de coulissement (28) de la colonnette,
- l'excroissance de guidage comporte une partie de jonction (29) et une partie de guidage (30),
- la partie de jonction (29) joint l'extrémité de la colonnette à la partie de guidage,
- la partie de jonction (29) a une forme cylindrique de diamètre (31) inférieur à un diamètre minimal (32) de la colonnette,
- la partie de guidage a une forme cylindrique de diamètre (33) supérieur au diamètre de la partie de jonction.

6. Dispositif selon l'une des revendications 1 à 5, **caractérisé en ce que** la pièce de caoutchouc (27) a une forme cylindrique creuse, une partie creuse (34) de la pièce ayant une forme complémentaire de l'excroissance de guidage (22).

7. Dispositif selon la revendication 6, **caractérisé en ce que** la pièce de caoutchouc (27) comporte un orifice de passage (35) et un orifice d'évacuation (36) situés sur des parties opposées de la pièce de caoutchouc, ces orifices mettant en communication la partie creuse de la pièce de caoutchouc (27) et l'extérieur.

8. Dispositif selon la revendication 7, **caractérisé en ce que** l'orifice de passage (35) est un orifice circulaire ayant un diamètre légèrement supérieur au diamètre de la partie de jonction (29).

## Claims

1. Disc brake device (1) comprising
- a carrier (4) comprising at least one bore (13),
- a calliper (5) comprising at least one guide pin (14) mounted so that it can slide in the bore of the carrier,
- a disc (3) mounted so that it can rotate with respect to the calliper about an axis of rotation (2), **characterized in that**
- the guide pin is of frustoconical shape, one end (18) of the guide pin, having a diameter (19) smaller than a diameter (21) of another end (20) of the guide pin, being inserted more deeply into the bore than the other end (20),
- the end of the guide pin that has the smaller diameter comprises a guiding protrusion (22).

2. Device according to Claim 1, **characterized in that** the protrusion is of a shape that complements the bore.

3. Device according to one of Claims 1 to 2, **characterized in that** the protrusion is covered by a piece of rubber (27).

4. Device according to one of Claims 1 to 3, **characterized in that** the guide pin is of pure frustoconical shape, that is to say that an external surface of the frustoconical guide pin is plain.

5. Device according to one of Claims 1 to 4, **characterized in that**:
- the guide protrusion develops along an axis of sliding (28) of the guide pin,
- the guide protrusion comprises a joining part (29) and a guiding part (30),
- the joining part (29) joins the end of the guide pin to the guide part,
- the joining part (29) is of a cylindrical shape with a diameter (31) smaller than a minimal diameter (32) of the guide pin,
- the guiding part is of a cylindrical shape with a diameter (33) greater than the diameter of the joining part.

6. Device according to one of Claims 1 to 5, **characterized in that** the piece of rubber (27) is in the shape of a hollow cylinder, a hollow part (34) of the piece having a shape that complements the guiding protrusion (22).

7. Device according to Claim 6, **characterized in that** the piece of rubber (27) comprises a passage orifice (35) and a discharge orifice (36) which are situated in opposite parts of the piece of rubber, these orifices placing the hollowing part of the piece of rubber (27) in communication with the outside.

8. Device according to Claim 7, **characterized in that** the passage orifice (35) is a circular orifice of a diameter slightly greater than the diameter of the joining part (29).

## Patentansprüche

1. Scheibenbremsvorrichtung (1) mit
- einem Halter (4) mit mindestens einer Bohrung (13),
- einem Bremssattel (5) mit mindestens einer in der Bohrung des Halters gleitend angebrachten Stange (14),
- einer relativ zum Bremssattel um eine Drehachse (2) drehbar angebrachten Scheibe (3),
**dadurch gekennzeichnet, dass**
- die Stange eine kegelstumpfartige Form hat, wobei ein Ende (18) der Stange, das einen Durchmesser (19) hat, der kleiner ist als ein Durchmesser (21) eines anderen Endes (20) der Stange, tiefer als das andere Ende (20) in die Bohrung eingesetzt ist,
- das Ende der Säule mit dem kleineren Durchmesser eine Führungsprotuberanz (2) aufweist.

2. Vorrichtung nach Anspruch 1, **dadurch gekennzeichnet, dass** die Protuberanz eine zur Bohrung komplementäre Form hat.

3. Vorrichtung nach einem der Ansprüche 1 bis 2, **dadurch gekennzeichnet, dass** die Protuberanz mit einem Gummistück (27) überzogen ist.

4. Vorrichtung nach einem der Ansprüche 1 bis 3, **dadurch gekennzeichnet, dass** die Stange eine rein kegelstumpfartige Form hat, also dass eine Außenfläche der kegelstumpfartigen Stange glatt ist.

5. Vorrichtung nach einem der Ansprüche 1 bis 4, **dadurch gekennzeichnet, dass**
- die Führungsprotuberanz sich entlang einer Gleitachse (28) der Stange ausbildet,
- die Führungsprotuberanz einen Verbindungsteil (29) und einen Führungsteil (30) aufweist,
- der Verbindungsteil (29) das Ende der Stange mit dem Führungsteil verbindet,
- der Verbindungsteil (29) eine zylindrische Form mit einem Durchmesser (31) hat, der kleiner ist als ein kleinster Durchmesser (32) der Stange,
- der Führungsteil (29) eine zylindrische Form mit einem Durchmesser (33) hat, der größer ist als der Durchmesser des Verbindungsteils.

6. Vorrichtung nach einem der Ansprüche 1 bis 5, **dadurch gekennzeichnet, dass** das Gummistück (27) eine hohlzylindrische Form hat, wobei ein hohler Teil (34) des Gummistücks eine zur Führungsprotuberanz komplementäre Form hat.

7. Vorrichtung nach Anspruch 6, **dadurch gekennzeichnet, dass** das Gummistück (27) eine Durchgangsöffnung (35) und eine Ausströmöffnung (36) aufweist, die an entgegengesetzten Teilen des Gummistücks angeordnet sind, wobei diese Öffnungen den hohlen Teil des Gummistücks (27) mit der Außenseite verbindet.

8. Vorrichtung nach Anspruch 7, **dadurch gekennzeichnet, dass** die Durchgangsöffnung (35) eine kreisförmige Öffnung mit einem Durchmesser ist, der geringfügig größer ist als der Durchmesser des Verbindungsteils (29).
